# EUROPEAN PATENT SPECIFICATION

(11) **EP 3 055 273 B1**
(45) Date of publication and mention of the grant of the patent: **02.06.2021**
(21) Application number: 14876992.0
(22) Date of filing: 29.09.2014
(51) Int. Cl.: C04B 35/64, C04B 35/645, B28B 1/24, B28B 1/52, C04B 35/80, C04B 35/532

(54) **PROCESSING METHOD FOR PIP DERIVED CMC ARTICLE**
VERARBEITUNGSVERFAHREN FÜR EINEN AUS PIP GEWONNENEN CMC-ARTIKEL
PROCÉDÉ DE TRAITEMENT POUR ARTICLE EN COMPOSITE DE MATRICE CÉRAMIQUE DÉRIVÉ DE PIP

(30) Priority: 07.10.2013 US 201361887530 P
(43) Date of publication of application: 17.08.2016
(73) Proprietor: Raytheon Technologies Corporation, Farmington, CT 06032 (US)
(72) Inventor: AMINI, Shahram, Glastonbury, Connecticut 06033 (US); SCHMIDT, Wayde R., Pomfret Center, Connecticut 06259 (US); KASHYAP, Tania Bhatia, West Hartford, Connecticut 06107 (US); HERMANN, Mark A., Glastonbury, Connecticut 06033 (US); SHEEDY, Paul, Bolton, Connecticut 06043 (US); LIMARGA, Andi M., Vernon, Connecticut 06066 (US); MCCAFFREY, Michael G., Windsor, Connecticut 06095 (US)
(74) Representative: Dehns
(86) International application number: PCT/US2014/057972
(87) International publication number: WO 2015/102690

(56) References cited:
- US-A- 6 133 396
- US-A1- 2003 008 067
- US-A1- 2004 048 731
- US-A1- 2006 151 912
- US-A1- 2006 244 165
- US-A1- 2011 071 013
- US-A1- 2012 034 440
- US-A1- 2012 267 833

## Description

### REFERENCE TO RELATED APPLICATION

This application claims priority to United States Provisional Application No. 61/887,530 filed on October 7, 2013.

### STATEMENT REGARDING FEDERALLY SPONSORED RESEARCH OR DEVELOPMENT

The subject of this disclosure was made with government support under Contract No.: N00014-10-C-0195 awarded by the United States Navy. The government therefore may have certain rights in the disclosed subject matter.

### BACKGROUND

A resin transfer molding process begins with a fibrous pre-form that is inserted into a rigid die piece mold. In the mold, resin is injected at a low temperature into a pre-mold and cured. The curing process changes the resin into a cured pre-ceramic polymer material. The pre-ceramic polymer material pre-form is removed from the mold tool and pyrolized at higher temperature within an inert atmosphere. The pyrolysis process transforms the pre-ceramic polymer into a ceramic material. During the pyrolysis process, a significant amount of shrinkage occurs during transformation into a ceramic material. The significant amount of shrinkage causes porosity including pores and cracks formed within the ceramic material. The pores and cracks formed within the ceramic material allow ingress of oxygen and steam into the ceramic article US 6 133 396 and US 2003/008067 disclose methods of forming a ceramic article comprising repeated PIP cycles.

Accordingly, it is desirable to develop a process for forming a ceramic article that effectively produces a ceramic article of a desired density and reduced porosity.

### SUMMARY

A method of forming a ceramic article, according to claim 1.

In a further embodiment of the foregoing, at least one pre-heat treatment PIP cycle on the ceramic article comprises at least two (2) PIP cycles.

In a further embodiment of any of the foregoing, at least one pre-heat treatment PIP cycle on the ceramic article comprises at least six (6) PIP cycles.

In a further embodiment of any of the foregoing, at least one post-heat treatment PIP cycle comprises at least two (2) PIP cycles.

In a further embodiment of any of the foregoing, the method of forming a ceramic article includes performing at least one heat treatment cycle after at least one (1) post-heat treatment PIP cycles.

In a further embodiment of any of the foregoing, the method of forming a ceramic article includes repeating both the post heat treatment PIP cycle after one heat treatment cycle for between two (2) and eight (8) iterations.

In a further embodiment of any of the foregoing, the method of forming a ceramic article includes performing the post heat treatment PIP cycle two (2) times after a one heat treatment cycle for between two (2) and eight (8) iterations.

In a further embodiment of any of the foregoing, the heat treatment cycle comprises exposing the ceramic article to a temperature between about 1200°C and 1600°C.

In a further embodiment of any of the foregoing, the PIP cycle comprises heating the ceramic article to temperature between about 900°C and 1100°C in an inert environment.

A method of forming a ceramic article according to an exemplary embodiment of this disclosure, among other possible things includes forming a pre-ceramic polymer article within a mold tool, performing a first pyrolizing step on the pre-ceramic polymer article to form a ceramic article, performing at least one pre-heat treatment polymer infiltration and pyrolizing (PIP) cycle on the ceramic article, performing an initial heat treatment of the ceramic article after the at least one pre-heat treatment PIP cycle, and performing a densification process, which is repeated at least two times after the initial heat treatment including at least two PIP cycles followed by a heat treatment process.

In a further embodiment of the foregoing method of forming a ceramic article includes repeating the densification step for between two (2) and eight (8) iterations.

In a further embodiment of any of the foregoing, at least one pre-heat treatment PIP cycle comprises between two (2) and eight (8) cycles.

In a further embodiment of any of the foregoing, the heat treatment cycle comprises exposing the ceramic article to a temperature between about 1200°C and 1600°C.

In a further embodiment of any of the foregoing, the PIP cycle comprises heating the ceramic article to a temperature between about 900°C and 1100°C in an inert environment.

Although the different examples have the specific components shown in the illustrations, embodiments of this disclosure are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 is a flow chart of an example method for fabricating a ceramic article.
Figure 2 is a schematic view of the example method for fabricating a ceramic article.
Figure 3 is enlarged view of a microstructure of an example ceramic article.
Figure 4 is an enlarged view of a microstructure of another example ceramic article.
Figure 5 is another enlarged view of a microstructure for another example ceramic article.
Figure 6 is a flow chart of another example method of fabricating a ceramic article.
Figure 7 is a graph illustrating a relationship between PIP cycles and density of a ceramic article.
Figure 8 is a graph illustrating a relationship between weight gain over time.

### DETAILED DESCRIPTION

A resin transfer molding and polymer infiltration and pyrolysis process for creating a ceramic article includes the use of a resin transfer molding tool that receives a pre-mold form inserted within the mold. The pre-mold is fabricated from a fiber weave or mesh in the general shape of the desired completed ceramic article. The pre-mold is injected with a polymer resin material and cured at a relatively low temperature. In one example, the low temperature is between 50°C and 200°C (122°F and 392°F). After the pre-mold has been cured, it is removed from the mold tool and pyrolized to transform the pre-ceramic polymer material into a ceramic material. The pyrolysis process includes heating to an elevated temperature of around 1000°C (1832°F) within an inert atmosphere. Shrinkage occurs during transformation from the pre-ceramic polymer to the ceramic material during pyrolysis due to loss of volatiles and densification of the remaining solid phase(s).

Shrinkage of the ceramic matrix during the pyrolysis process causes cracks, voids and openings within the ceramic material. The cracks, voids and openings within the ceramic matrix can allow oxygen and steam ingress into the completed ceramic article. Oxygen and steam ingress into the part is not desirable and, therefore, the example disclosed method and process provides for the redistribution and reduction in the density and size of voids, cracks and other openings within a completed ceramic article.

The polymer infiltration and pyrolysis cycle is utilized, as an example, to increase the density of the ceramic article. During the polymer infiltration process, a polymer resin is injected into the ceramic article and specifically within any accessible voids and cracks. The resin soaked ceramic article is heated to a temperature within an inert environment, such as in the presence of an argon-containing gas, to convert the resin material from the pre-ceramic polymer into ceramic material.

Although the pyrolysis process shrinks the pre-ceramic polymers a substantial amount, that shrinkage is such that voids and other inconsistencies may be formed within the material and spaced apart from the external surfaces. Voids that are separated from the external surfaces of the ceramic article may not be accessible for filling during subsequent polymer infiltration and pyrolization processes.

Accordingly, the example disclosed method provides a process for improving and increasing the amount of material that may be infiltrated into a ceramic article during polymer infiltration and pyrolization processes.

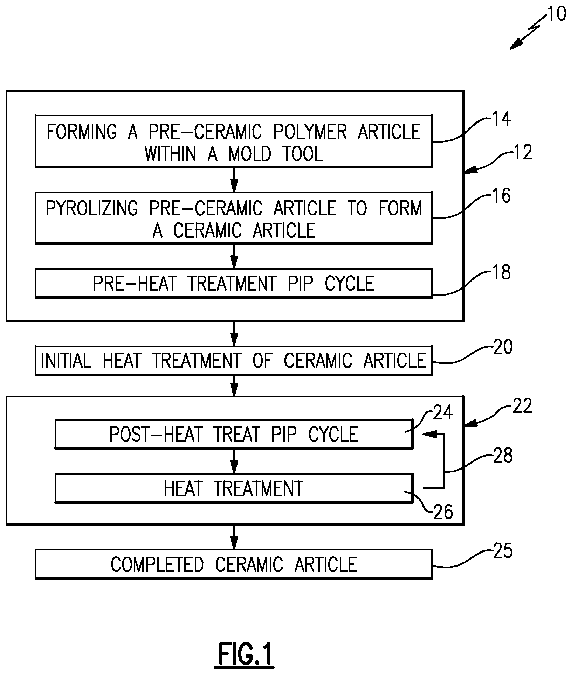

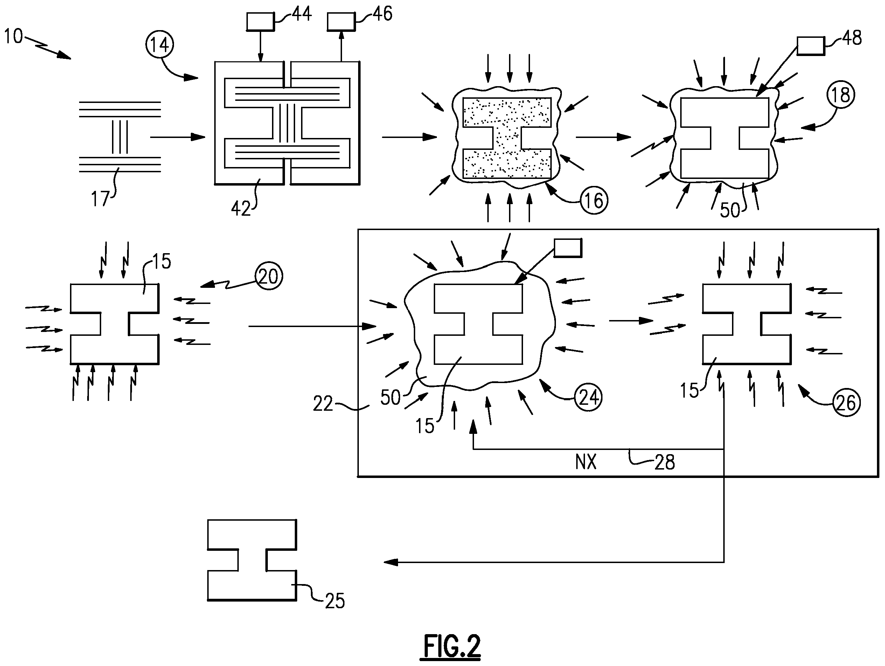

Referring to Figures 1 and 2, an example method is schematically indicated at 10 and includes the initial baseline process 12 of forming a pre-ceramic polymer article within a mold tool 42. The formation of a pre-ceramic polymer article within the mold tool 42 includes the step of inserting a pre-mold 17 consisting of a plurality of fibers into a cavity defined by the mold tool 42. Within the mold tool 42, resin, schematically indicated at 44, is injected and cured around the pre-mold 17. In this example, the mold tool 42 includes a vacuum source 46 to aid in the infusion of resin 44. The molding process indicated at 14 within the mold tool 42 generates a pre-ceramic polymer article that is sufficiently hard and cured to allow removal from the mold tool 42.

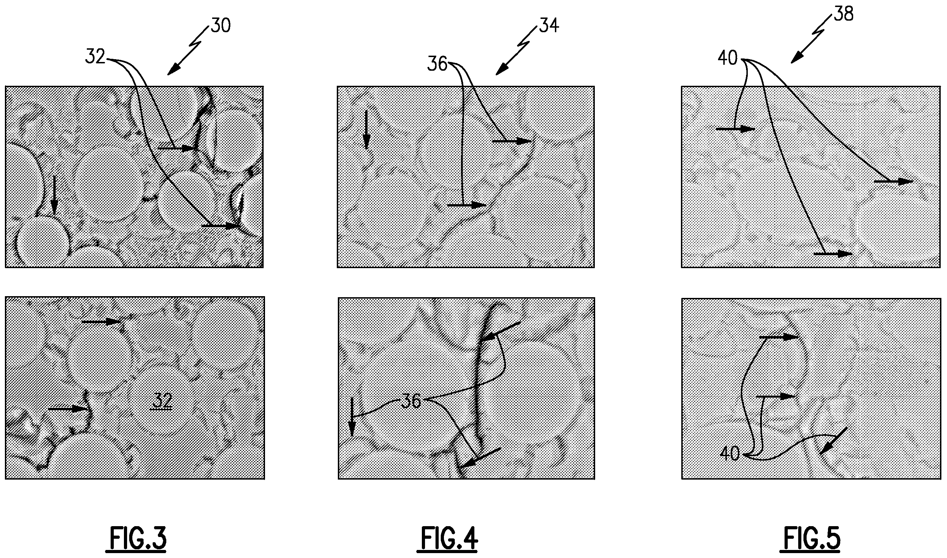

Once the pre-ceramic polymer article 16 is removed from the mold tool 42, an initial pyrolysis process indicated at 16 is performed to transform the structure of the pre-ceramic polymer material into ceramic material. The initial treatment of the pre-ceramic polymer article generates a ceramic material structure 30 as is exemplified in Figure 3 that includes cracks 32 and other voids. The cracks and voids 32 are not desirable and, therefore, an initial polymer infiltration and pyrolization process is performed as is indicated at 18. This initial polymer infiltration and pyrolization process is performed after an initial pyrolysis cycle indicated at 16.

Accordingly, the initial process 12 of forming the ceramic article includes the initial pyrolysis process 16 followed by at least one polymer infiltration and pyrolysis process (PIP), indicated at 18, after formation of the ceramic article 15.

From the initial process 12, the example disclosed method continues with the intentional use of intermittent high temperature heat treatment processes between subsequent PIP cycles prior to completion of the ceramic article 15. Post-pyrolysis exposure to high temperatures further densifies the ceramic matrix making up the ceramic article 15 and results in increased shrinkage of the ceramic matrix and creation of additional micro cracks.

The example process induces such a matrix modification early in the process to provide sufficient access paths that remain within the ceramic matrix to allow for the delivery of subsequent resin material into the ceramic material and voids. In other words, heat treatment prior to subsequent PIP cycles provides for the increased shrinkage of the ceramic material that results in larger voids, especially those that are in communication with external surfaces of the ceramic part. The larger voids provide larger pathways through which additional resin may be infiltrated into the ceramic article, and thereby larger quantities of resin can be infiltrated into the ceramic article to provide a desired increased density.

Accordingly, an initial heat treatment process 20 is performed after the baseline process 12. This initial heat treatment 20 process provides a further shrinkage of the matrix material to provide larger voids and pathways for subsequent infiltration of resin.

After the initial heat treatment process 20, a densification process 22 is implemented. The example densification process 22 includes repeated PIP cycles 24 followed immediately by heat treatment cycles 26. Each heat treatment cycle 26 causes a further shrinkage of the ceramic matrix that in turn provides for an increased amount of resin material to be infiltrated into the ceramic article 15 during subsequent PIP cycles 24.

In one example, the heat treatment process includes exposure of the ceramic article 15 to a temperature within a range between 1200°C and 1600°C (2192°F and 2912°F). The PIP process includes infiltration of resin material 48 followed by heating of the ceramic article 15 within the inert atmosphere 50 between about 900°C and 1100°C (1652°F and 2012°F) for at least one ½ hour. In this example, the inert atmosphere 50 is provided by an argon gas surrounding the ceramic article 15. It should be appreciated that other inert atmospheres, temperatures and times of exposure could be utilized and are within the contemplation of this disclosure.

Repeating the densification process 22 multiple times provides a desired density and reduction of voids and cracks within the ceramic microstructure. In the invention, the densification process 22 which includes PIP cycles 24 followed by the heat treatment cycle 26 is repeated as is indicated at 28 at least two (2) times. In the invention, the densification process 22 includes repeating both the PIP cycle 24 and one heat treatment cycle 26 for between two (2) and twelve (12) iterations. In the invention, , the PIP cycle 24 is repeated two (2) times for each single heat treatment cycle 26.

In another example, the densification process 22 includes two (2) PIP cycles followed by a single heat treatment cycle 26 which is subsequently followed by another two (2) PIP cycles. It should be understood that it is within the contemplation of this disclosure that different numbers and combinations of polymer infiltration process and heat treatment cycles could be utilized to provide a ceramic article 15 of a desired density.

Referring to Figure 4 an intermediate ceramic structure 34 is shown with reduced voids and cracks 36 after several iterations of the densification cycle 22. The cracks 36 are reduced in both size and quantity as compared to the initial structure shown in Figure 3. Referring to Figure 5, an example final ceramic structure 38 is illustrated with still fewer and smaller cracks and voids 40 as compared to the initial and intermediate structures shown in Figures 3 and 4.

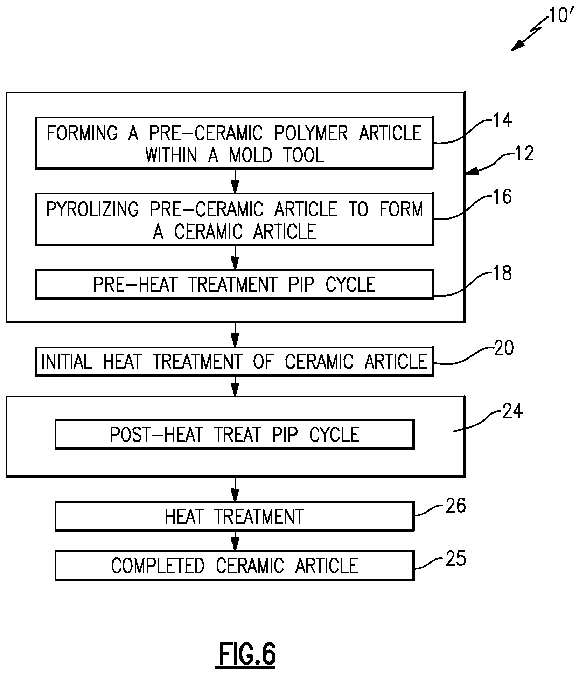

Referring to Figure 6, another example method 10' according to an exemplary embodiment of this disclosure includes the initial formation of the ceramic article 15 as is indicated at 12. After the initial formation of the ceramic article 15, the initial heat treatment process 20 is performed. In the example method 10', the post-heat PIP cycle 24 is repeated a number of times prior to the final heat treatment process 26. In this example, the PIP cycle 24 is repeated at least two (2) times and in another embodiment at least four (4) times prior to the subsequent heat treatment cycle indicated at 26.

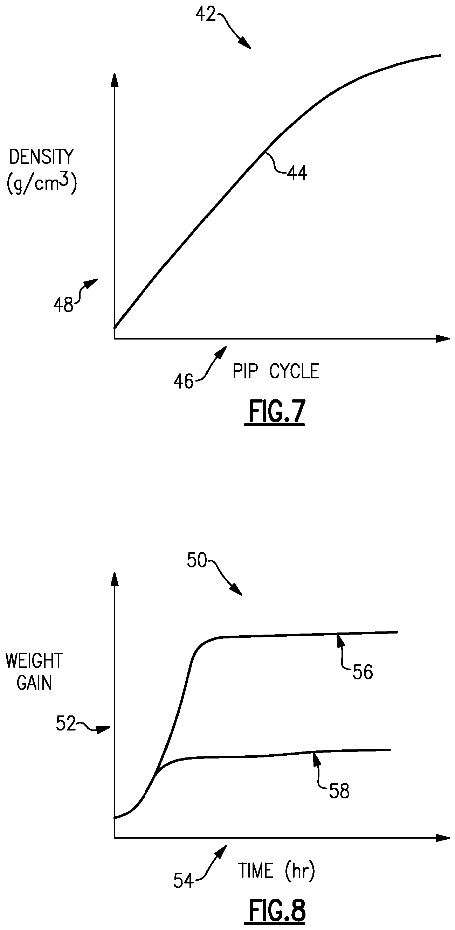

Referring to Figure 7 with continued reference to Figures 1, 3, 4 and 5, an example relationship 44 between density 48 and the number of PIP cycles 46 as is indicated by the graph 42. In this example, it can be seen that the density 48 increases in direct relationship to an increased number of PIP cycles 46.

Referring to Figure 8 with continued reference to Figures 3, 4 and 5, a graph 50 illustrates that a relationship between weight gain 52 and duration of time 54 can be improved utilizing the example method. In this example, the percent weight gain represents weight gained within a ceramic article as it sits in an oxygen or steam containing environment. The weight gain is a function of the density and size of voids within the ceramic article 15.

Accordingly, weight gain of the ceramic article 25 is minimized by reducing both the density and size of voids and cracks. In this example, the line 56 represents the weight gain of a ceramic article over time where the ceramic article is produced with fewer PIP cycles 24 as compared to a similar ceramic article represented by the line 58. In other words, Figure 7 provides a performance value that characterizes the success of the formation process in forming each ceramic article. The ceramic article indicated by the relationship 56 includes larger and more voids, cracks and other features on the surface that are capable of absorbing undesirable surrounding elements when compared to that of the ceramic article represented by the line 58.

Accordingly, the example disclosed method provides a method of fabricating a ceramic article that reduces voids and micro cracks by providing an intermediate heat treatment process to increase the size of voids between subsequent polymer infiltration processes that, in turn, allow for an increased amount of resin material to be infiltrated into the ceramic article during processing.

Although an example embodiment has been disclosed, a worker of ordinary skill in this art would recognize that certain modifications would come within the scope of this disclosure. For that reason, the following claims should be studied to determine the scope and content of this disclosure.

## Claims

1. A method of forming a ceramic article comprising:
forming a pre-ceramic polymer article within a mold tool;
performing a first pyrolizing step on the pre-ceramic polymer article to form a ceramic article;
performing at least one pre-heat treatment polymer infiltration and pyrolizing (PIP) cycle on the ceramic article;
performing an initial heat treatment cycle of the ceramic article after the at least one pre-heat treatment PIP cycle; and
performing a densification process after the at least one initial heat treatment process; wherein the densification process is repeated at least two times and comprises two PIP cycles followed by a heat treatment cycle.

2. The method as recited in claim 1, wherein the at least one pre-heat treatment PIP cycle on the ceramic article comprises at least two (2) PIP cycles.

3. The method as recited in claim 1, wherein the at least one pre-heat treatment PIP cycle on the ceramic article comprises at least six (6) PIP cycles.

4. The method as recited in any preceding claim, wherein the heat treatment cycles comprise exposing the ceramic article to a temperature between 1200°C and 1600°C.

5. The method as recited in any preceding claim, wherein the PIP cycles comprise heating the ceramic article to temperature between 900°C and 1100°C in an inert environment.

6. The method as recited in any preceding claim, including repeating the densification step for between two (2) and eight (8) iterations.

7. The method as recited in any preceding claim, wherein the at least one pre-heat treatment PIP cycle comprises between two (2) and eight (8) cycles.

## Patentansprüche

1. Verfahren zum Bilden eines Keramikartikels, umfassend:
Bilden eines präkeramischen Polymerartikels in einem Formwerkzeug;
Durchführen eines ersten Pyrolyseschritts an dem präkeramischen Polymerartikel, um einen Keramikartikel zu bilden;
Durchführen mindestens eines Polymerinfiltrations- und Pyrolyse-Zyklus(PIP-Zyklus) mit Vorwärmebehandlung an dem Keramikartikel;
Durchführen eines anfänglichen Wärmebehandlungszyklus des Keramikartikels nach dem mindestens einen PIP-Zyklus mit Vorwärmebehandlung; und
Durchführen eines Verdichtungsprozesses nach dem mindestens einen anfänglichen Wärmebehandlungsprozess; wobei der Verdichtungsprozess mindestens zwei Mal wiederholt wird und zwei PIP-Zyklen gefolgt von einem Wärmebehandlungszyklus umfasst.

2. Verfahren nach Anspruch 1, wobei der mindestens eine PIP-Zyklus mit Vorwärmebehandlung an dem Keramikartikel mindestens zwei (2) PIP-Zyklen umfasst.

3. Verfahren nach Anspruch 1, wobei der mindestens eine PIP-Zyklus mit Vorwärmebehandlung an dem Keramikartikel mindestens sechs (6) PIP-Zyklen umfasst.

4. Verfahren nach einem der vorstehenden Ansprüche, wobei die Wärmebehandlungszyklen umfassen, dass der Keramikartikel einer Temperatur zwischen 1.200 °C und 1.600 °C ausgesetzt ist.

5. Verfahren nach einer der vorstehenden Ansprüche, wobei die PIP-Zyklen ein Aufheizen des Keramikartikels auf eine Temperatur zwischen 900 °C und 1.100 °C in einer inerten Umgebung umfassen.

6. Verfahren nach einem der vorstehenden Ansprüche, beinhaltend ein Wiederholen des Verdichtungsschritts für zwei (2) bis acht (8) Iterationen.

7. Verfahren nach einem der vorstehenden Ansprüche, wobei der mindestens eine PIP-Zyklus mit Vorwärmebehandlung zwischen zwei (2) und acht (8) Zyklen umfasst.

## Revendications

1. Procédé de formation d'un article en céramique comprenant :
la formation d'un article polymère précéramique dans un outil de moulage ;
la réalisation d'une première étape de pyrolyse sur l'article polymère précéramique pour former un article en céramique ;
la réalisation d'au moins un cycle d'infiltration et de pyrolyse de polymère (PIP) de pré-traitement thermique sur l'article en céramique ;
la réalisation d'un cycle de traitement thermique initial de l'article en céramique après l'au moins un cycle PIP de pré-traitement thermique ; et
la réalisation d'un processus de densification après l'au moins un processus de traitement thermique initial ; dans lequel le processus de densification se répète au moins deux fois et comprend deux cycles PIP suivis d'un cycle de traitement thermique.

2. Procédé selon la revendication 1, dans lequel l'au moins un cycle PIP de pré-traitement thermique sur l'article en céramique comprend au moins deux (2) cycles PIP.

3. Procédé selon la revendication 1, dans lequel l'au moins un cycle PIP de pré-traitement thermique sur l'article en céramique comprend au moins six (6) cycles PIP.

4. Procédé selon une quelconque revendication précédente, dans lequel les cycles de traitement thermique comprennent l'exposition de l'article en céramique à une température comprise entre 1 200 °C et 1 600 °C.

5. Procédé selon une quelconque revendication précédente, dans lequel les cycles PIP comprennent le chauffage de l'article en céramique à une température comprise entre 900 °C et 1 100 °C dans un environnement inerte.

6. Procédé selon une quelconque revendication précédente, comportant la répétition de l'étape de densification entre deux (2) et huit (8) itérations.

7. Procédé selon une quelconque revendication précédente, dans lequel l'au moins un cycle PIP de pré-traitement thermique comprend entre deux (2) et huit (8) cycles.
